(19) Europäisches Patentamt
European Patent Office
Office européen des brevets

(11) EP 4 765 920 A1

(12) EUROPEAN PATENT APPLICATION
published in accordance with Art. 153(4) EPC

(43) Date of publication:
24.06.2026 Bulletin 2026/26

(51) International Patent Classification (IPC):
H04W 16/28 (2009.01)    H04W 72/04 (2023.01)

(21) Application number: 24858366.8

(52) Cooperative Patent Classification (CPC):
H04W 16/28; H04W 72/04

(22) Date of filing: 19.08.2024

(86) International application number:
PCT/CN2024/113161

(87) International publication number:
WO 2025/044823 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 01.09.2023 CN 202311130896

(71) Applicant: ZTE CORPORATION
Shenzhen, Guangdong 518057 (CN)

(72) Inventor: SU, Dongliang
Shenzhen, Guangdong 518057 (CN)

(74) Representative: Ziebig Hengelhaupt Intellectual
Property Attorneys
Patentanwaltskanzlei PartGmbB
Leipziger Straße 49
10117 Berlin (DE)

(54) BEAM CONFIGURATION METHOD AND APPARATUS, COMMUNICATION DEVICE, AND STORAGE MEDIUM

(57) The present application provides a beam configuration method and an apparatus, a device, and a storage medium. In the present application, beam groups are constructed based on beams to be configured, inter-node distances between a plurality of access nodes are obtained, a set of neighboring access nodes for each access node among the plurality of access nodes is determined based on the inter-node distances, and beam groups are configured for each access node, where the beam groups configured for each access node are different from the beam groups configured for the set of neighboring access nodes corresponding to each access node.

FIG. 2

**Description**

**CROSS-REFERENCE TO RELATED APPLICATIONS**

The present application claims priority to Chinese Patent Application No. 202311130896.0, filed on September 1, 2023, the entire contents of which are incorporated herein by reference.

**TECHNICAL FIELD**

The present application relates to the technical field of communication, and in particular to a beam configuration method, a beam configuration apparatus, a communication device, and a storage medium.

**BACKGROUND**

With the dramatic increase in data traffic demand, the scale of wireless communication systems is continuously expanding. The overlapping coverage areas between base stations require additional transmission performance enhancement. Distributed systems utilize high-speed connections and information exchange between multiple distributed access nodes to achieve higher quality transmission performance within the coverage area. In high-frequency band distributed communication systems, such as millimeter-wave or terahertz bands, signal transmission between each access node and user terminal is typically performed using analog beamforming. The initial connection between the access node and the user terminal is established through SSB (synchronization signal block) beam scanning and pairing, and subsequent uplink and downlink data transmission is also based on the paired beams. Each access node has specific requirements regarding the number and shape of SSB beams to satisfy the coverage area requirements of that node. Therefore, as the number of access nodes increases, the total number of SSB beams configured within a cell may exceed the upper limit specified by current communication protocols. Consequently, how to configure beams for multiple access nodes, ensuring that the beam groups configure for each access node are different from those of its neighboring access nodes, becomes a pressing problem that needs to be solved.

**SUMMARY**

The main purpose of the present application is to provide a beam configuration method, a beam configuration apparatus, a communication device, and a storage medium.
To achieve the above purpose, the present application provides a beam configuration method, including the following steps: constructing beam groups based on beams to be configured; obtaining inter-node distances between a plurality of access nodes; determining a set of neighboring access nodes for each access node among the plurality of access nodes based on the inter-node distances; and configuring the beam groups for each access node, where beam groups configured for each access node are different from beam groups configured for the set of neighboring access nodes corresponding to each access node.
Furthermore, to achieve the above purpose, the present application also provides a beam configuration apparatus, including: a beam group construction module, configured to construct beam groups based on beams to be configured; a distance acquisition module, configured to obtain inter-node distances between a plurality of access nodes; a node determination module, configured to determine a set of neighboring access nodes for each access node among the plurality of access nodes based on the inter-node distances; and a beam configuration module, configured to configure the beam groups for each access node, where beam groups configured for each access node are different from beam groups configured for the set of neighboring access nodes corresponding to each access node.
Furthermore, to achieve the above purpose, the present application also proposes a communication device, including: a memory, a processor, and a beam configuration program stored on the memory and executable on the processor, and the beam configuration program is configured to implement the beam configuration method as described above.
Furthermore, to achieve the above purpose, the present application also proposes a storage medium, a beam configuration program is stored on the storage medium, and when the beam configuration program is executed by a processor, the beam configuration method as described above is implemented.

**BRIEF DESCRIPTION OF THE DRAWINGS**

FIG. 1 is a schematic structural diagram of a communication device in a hardware operating environment involved in an embodiment of the present application.

FIG. 2 is a flow chart illustrating a beam configuration method according to a first embodiment of the present application.

FIG. 3 is a flow chart illustrating the beam configuration method according to a second embodiment of the present application.

FIG. 4 is a flow chart illustrating the beam configuration method according to a third embodiment of the present application.

FIG. 5 is an overall flowchart illustrating the beam configuration method according to an embodiment of the present application.

FIG. 6 is a schematic diagram of access nodes in a uniformly distribution scenario of the beam configuration method according to an embodiment of the present application.

FIG. 7 is a schematic diagram of access nodes in a rectangular distribution scenario of the beam configuration method according to an embodiment of the present application.

FIG. 8 is a structural block diagram of a beam configuration apparatus according to a first embodiment of the present application.

The realization of the objectives, functional features, and advantages of the present application will be further explained in conjunction with the embodiments and with reference to the accompanying drawings.

## DETAILED DESCRIPTION OF THE EMBODIMENTS

It should be understood that the specific embodiments described herein are only for explaining the present application and are not intended to limit the present application.

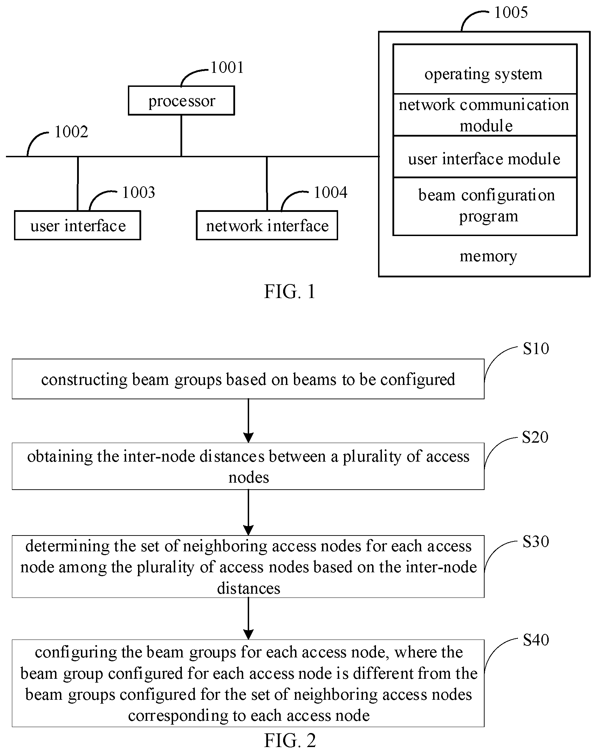

Referring to FIG. 1, FIG. 1 is a schematic structural diagram of the communication device of the hardware operating environment involved in the embodiment of the present application.

As shown in FIG. 1, the communication device may include: a processor 1001, such as a central processing unit (CPU), a communication bus 1002, a user interface 1003, a network interface 1004, and a memory 1005. The communication bus 1002 is used to facilitate communication between these components. The user interface 1003 may include a display and an input unit such as a keyboard. The user interface 1003 may also include standard wired and wireless interfaces. The network interface 1004 may include standard wired and wireless interfaces (such as a Wireless-Fidelity (Wi-Fi) interface). The memory 1005 can be high-speed random access memory (RAM) or stable non-volatile memory (NVM), such as disk storage. The memory 1005 can also be a storage device independent of the aforementioned processor 1001.

Those skilled in the art will understand that the structure shown in FIG. 1 does not constitute a limitation on the communication device, and may include more or fewer components than shown in the figure, or a combination of certain components, or have a different arrangement of components.

As shown in FIG. 1, the memory 1005, as a storage medium, can include an operating system, a network communication module, a user interface module, and a beam configuration program.

In the communication device shown in FIG. 1, the network interface 1004 is mainly used for data communication with a network server; the user interface 1003 is mainly used for data interaction with the user; and the processor 1001 and the memory 1005 in the communication device of the present application can be provided in the communication device. The communication device calls the beam configuration program stored in the memory 1005 through the processor 1001 and performs the beam configuration method in the embodiments of the present application.

Based on the aforementioned communication device, the embodiment of the present application provides a beam configuration method. Referring to FIG. 2, FIG. 2 is a flow chart illustrating the beam configuration method according to the first embodiment of the present application.

In this embodiment, the beam configuration method includes the following steps.

Step S10, constructing beam groups based on beams to be configured.

The execution subject in this embodiment can be a computing service device with data processing, network communication, and program execution functions, such as a computer, or devices and chips such as a Digital Signal Processor (DSP), Field Programmable Gate Array (FPGA), and Application Specific Integrated Circuit (ASIC).

The beam configuration method in this embodiment can be applied to multi-point cooperative transmission scenarios in distributed communication systems. In an implementation, after the distributed system nodes are deployed, the SSB beam configuration of the access nodes is performed using the beam configuration method proposed in this embodiment. Afterward, the subsequent beam scanning and data transmission processes are carried out.

This embodiment allows for separate beam configuration for each cell. Therefore, it is necessary to identify all access nodes in each cell and configure the beams for all access nodes within the same cell, optionally including SSB beam configuration. The beam configuration requirement refers to the number of SSB beams that each access node needs to configure to satisfy coverage requirements. The preset beam condition refers to the upper limit of the number of configurable SSB beams pre-set within that cell, for example, 20, 24, etc. This embodiment does not impose specific limitations on this.

In an embodiment, the beam groups can be constructed based on the beams to be configured. The beams to be configured refer to the beams that can be configured to the access node. These beams can be grouped to form the beam groups, and the number of beams in each beam group can be the same or different. This embodiment does not impose specific limitations on the number of beam groups, the number of beams in each beam group, or the beams in each beam group. For example, when the beam groups to be configured include beam 1 to beam 8, the beam groups can include beam group 1 (beam 1 to beam 4) and beam group 2 (beam 5 to beam 8), or can include beam group 1 (beam 1, beam 2), beam group 2 (beam 3, beam 4), beam group 3 (beam 5, beam 6), and beam group 4 (beam 7, beam 8), etc.

To determine the conditions under which beam groups need to be constructed, in this embodiment, before step S10, the method further includes: determining the beam configuration requirements corresponding to each access node in the same cell, and determining the total required number of beams based on the beam configuration requirements; determining that the beam configuration requirements satisfy the preset beam condition when the total required number of beams is greater than a preset number of beams; and constructing the beam groups based on the beams to be configured when the preset beam condition is satisfied.

The total required number of beams can be obtained by summing the beam configuration requirements corresponding to each access node in the same cell. Generally, the beam configuration requirements are the same for each access node in the same coverage scenario, such as an office or a room. Assuming a cell includes N access nodes, and the beam configuration requirement corresponding to each access node is Q, the total required number of beams is QN.

The preset number of beams refers to the upper limit on the number of SSB beams configured for each cell, as specified by the communication protocol or constrained by the distributed communication system. This embodiment does not impose any specific limitations on the value of the preset number of beams.

In an embodiment, assuming the preset number of beams is K, if the total number of required beams is less than or equal to the preset number of beams, i.e., QN is less than or equal to K, it is determined that the preset beam condition is not met, indicating that the number of SSB beams configured for the access node in this cell is not limited. If the total number of required beams is greater than the preset number of beams, i.e., QN is greater than K, it is determined that the preset beam condition is met, indicating that the number of SSB beams configured for the access node in this cell is limited.

In this embodiment, whether the beam configuration requirements corresponding to each access node in the same cell satisfy the preset beam condition is determined based on the relationship between the total number of required beams and the preset number of beams. Beam configuration is then performed separately for cases where the preset beam condition is satisfied and where they are not satisfied.

In order to perform beam configuration under conditions where the preset beam condition is not satisfied, in this embodiment, after determining the beam configuration requirements corresponding to each access node in the same cell and determining the total number of required beams based on the beam configuration requirements, the method further includes: determining that the beam configuration requirements do not satisfy the preset beam condition if the total number of required beams is less than or equal to the preset number of beams; if the preset beam condition is not satisfied, dividing the beams to be configured according to the beam configuration requirements corresponding to each access node to obtain divided beam groups; and configuring the corresponding divided beam groups for each access node.

If the beam configuration requirements corresponding to each access node in the same cell do not satisfy the preset beam condition, the number of SSB beam configurations is not limited. The SSB beam configuration only needs to satisfy the following: the SSB beam configurations corresponding to each access node are different. The unassigned SSB beams can be configured sequentially at each access node without any other allocation rules or restrictions, and the process ends.

In an embodiment, the beams to be configured can be divided based on the beam configuration requirements corresponding to each access node to obtain the divided beam groups. Each access node is then configured with its corresponding divided beam group. The number of beams in the divided beam group is the same as the beam configuration requirement of the corresponding access node. For example, if the beam configuration requirement corresponding to each access node is Q, the divided beam group can also contain Q beams to be configured, and each access node is configured with its corresponding divided beam group.

In this embodiment, if the beam configuration requirements in the same cell do not satisfy the preset beam condition, the beams to be configured are divided according to the beam configuration requirements corresponding to each access node, and the corresponding divided beam groups are configured for each access node. This enables the configuration of beams for each access node when the number of beam configurations is not limited.

Step S20, obtaining the inter-node distances between a plurality of access nodes.

The inter-node distance refers to the distance between any two access nodes within the same cell. Specifically, the coordinates corresponding to each access node within the cell are first determined, and then the distance between any two access nodes is calculated based on the node coordinates using the distance formula between two points.

Step S30, determining the set of neighboring access nodes for each access node among the plurality of access nodes based on the inter-node distances.

The set of neighboring access nodes can include the neighboring access nodes corresponding to each access node. Specifically, the neighboring access nodes corresponding to each access node can be determined based on the inter-node distance. This can be done by first determining the inter-node distance between each access node and other access nodes, and then using the access nodes with the inter-node distance less than a preset distance as neighboring access nodes. The preset distance is not specifically limited in this embodiment. Alternatively, the inter-node distances can be sorted by size, and a preset number of inter-node distances can be selected from the inter-node distances in ascending order. The corresponding access nodes are then considered neighboring access nodes. The preset number is not specifically limited in this embodiment.

Step S40, configuring the beam groups for each access node, where the beam group configured for each access node is different from the beam groups configured for the set of neighboring access nodes corresponding to each access node.

The constructed beam groups can be configured for each access node. The beam group configured for each access node is different from the beam groups configured for the set of neighboring access nodes corresponding to each access node. That is, the beam group configured for each access node is different from the beam groups configured for its neighboring access nodes. For example, if beam groups 1 to 4 are included, and a certain access node corresponds to three neighboring access nodes, beam group 1 can be configured for the access node, beam group 2 for neighboring access node 1, beam group 3 for neighboring access node 2, and beam group 4 for neighboring access node 3. This effectively avoids configuring the same beam group for access nodes in overlapping coverage areas.

In this embodiment, the beam groups are constructed based on the beams to be configured, the inter-node distances between the plurality of access nodes are then obtained, and the set of neighboring access nodes for each access node among the plurality of access nodes is determined based on the inter-node distances. Finally, the beam groups are configured for each access node, and the beam group configured for each access node is different from the beam groups configured for the set of neighboring access nodes corresponding to each access node. In this embodiment, the set of neighboring access nodes for each access node is determined based on the inter-node distances, and the beam groups are configured for each access node. This allows for beam configuration at each access node, and the beam groups configured for each access node are different from the beam groups configured for the set of neighboring access nodes corresponding to each access node. This at least solves the problem in the related art where the same beams simultaneously transmit signals in overlapping coverage areas, leading to coverage gaps and degraded transmission performance.

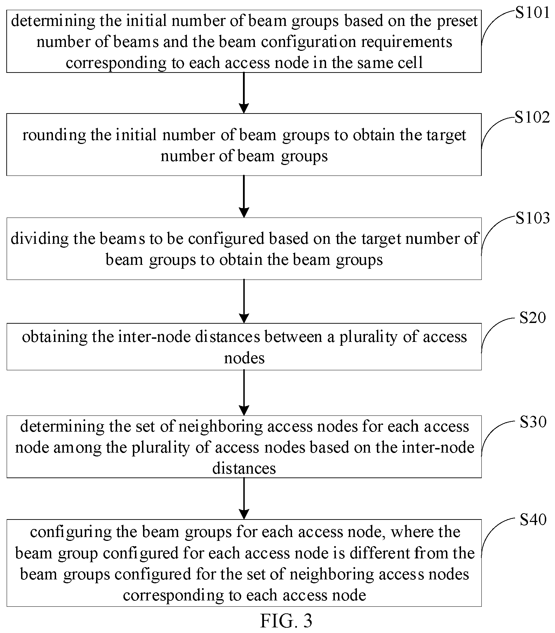

Referring to FIG. 3, FIG. 3 is a flow chart illustrating the beam configuration method according to the second embodiment of the present application.

Based on the first embodiment described above, in this embodiment, step S10 includes:
Step S101, determining the initial number of beam groups based on the preset number of beams and the beam configuration requirements corresponding to each access node in the same cell.

The initial number of beam groups can be determined based on the preset number of beams and the beam configuration requirements. For example, if the preset number of beams is K, and the beam configuration requirement corresponding to each access node is Q, the initial number of beam groups is K/Q.

Step S102, rounding the initial number of beam groups to obtain the target number of beam groups.

If the initial number of beam groups is not an integer, it can be rounded to an integer, specifically, it may be rounded down. For example, if the initial number of beam groups is 5.3, the target number of beam groups is 5.

Step S103, dividing the beams to be configured based on the target number of beam groups to obtain the beam groups.

In an embodiment, the beams to be configured can be divided based on the target number of beam groups, to obtain the beam groups with a number of groups equal to the target number of beam groups. For example, if the target number of beam groups is L, the resulting beam groups could be {beam group 1, beam group 2, ..., beam group L}, where the beams to be configured within each beam group are different.

In order to effectively obtain the beam groups, in this embodiment, step S103 includes: labeling the beams to be configured to obtain the labeled beams; constructing a blank initial beam group based on the target number of beam groups; and sequentially assigning the beams to be configured to the initial beam group according to the beam labels corresponding to the labeled beams, to obtain the beam groups.

In this embodiment, the beams to be configured can be labeled first. For example, if there are R beams to be configured, the resulting labeled beams can be represented as {beam 1, beam 2, ..., beam R}.

The initial beam group can be a blank beam group with a number of groups equal to the target number of beam groups, meaning the initial beam group does not contain any beams to be configured. Then, the beams to be configured are sequentially assigned to the initial beam groups according to the beam labels corresponding to the labeled beams.

That is, the beams to be configured are assigned to the initial beam groups in order. For example, beam group 1 includes beams 1, 2, ..., 8, beam group 2 includes beams 9, 10, ..., 16, and so on.

In this embodiment, the initial number of beam groups are determined based on the preset number of beams and the beam configuration requirements corresponding to each access node in the same cell. Then, the initial number of beam groups is rounded to obtain the target number of beam groups. Based on the target number of beam groups, the beams to be configured are divided to obtain the beam groups. In this embodiment, the target number of beam groups are determined based on the preset number of beams and the beam configuration requirements, effectively obtaining the number of beam groups. Then, the beams to be configured are divided based on the target number of beam groups to obtain the beam groups. This allows the beams to be configured to be sequentially assigned to each beam group, ensuring that the beams within each beam group are distinct.

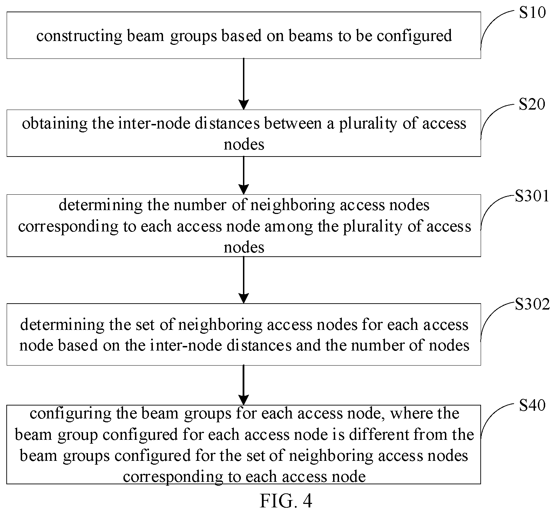

Referring to FIG. 4, FIG. 4 is a flow chart illustrating the beam configuration method according to the third embodiment of the present application.

Based on the above embodiments, in this embodiment, step S30 includes:

Step S301, determining the number of neighboring access nodes corresponding to each access node among the plurality of access nodes.

The number of nodes refers to the number of neighboring access nodes corresponding to each access node. The number of nodes must be greater than or equal to 1 and less than the target number of beam groups mentioned above. The number of nodes is related to the density of access nodes within the cell; the denser the access nodes, the greater the corresponding number of nodes. The number of neighboring access nodes corresponding to each access node may be different. In this embodiment, the number of neighboring access nodes corresponding to each access node can be preset, for example, 3, 4, 5, etc. This embodiment does not impose specific limitations on this.

Step S302, determining the set of neighboring access nodes for each access node based on the inter-node distances and the number of nodes.

In an embodiment, the set of neighboring access nodes for each access node can be determined based on the inter-node distances and the number of nodes. Specifically, the inter-node distances can be arranged in descending or ascending order, and then the target inter-node distance with the smallest distances (equal to the number of nodes) are selected. The access nodes corresponding to the target inter-node distance are considered the neighboring access nodes to that access node. For example, if the inter-node distances corresponding to a given access node include 2, 2, 3, 3, 4, 5, 6, and 7, and the number of nodes is 4, the target inter-node distances are 2, 2, 3, and 3. The access nodes corresponding to these four distances are the neighboring access nodes, and these four neighboring access nodes form the set of neighboring access nodes.

To effectively perform beam configuration, in this embodiment, step S40 includes: labeling each beam group to obtain labeled beam groups; and sequentially assigning the labeled beam groups to each access node according to beam group labels corresponding to the labeled beam groups. The beam groups configured for each access node are different from the beam groups configured for the set of neighboring access nodes corresponding to each access node.

This embodiment allows for labeling the beam groups, resulting in the labeled beam groups, such as {beam group 1, beam group 2, ..., beam group L}. The labeled beam groups are then assigned to each access node sequentially according to the beam group labels; for example, access node 1 is configured with beam group 1, and access node 2 is configured with beam group 2.

The beam groups configured for each access node are different from the beam groups configured for the set of neighboring access nodes corresponding to each access node. For example, if the neighboring access nodes corresponding to access node 1 are access nodes 2, 3, and 4, the beam groups configured for access nodes 1, 2, 3, and 4 cannot be the same.

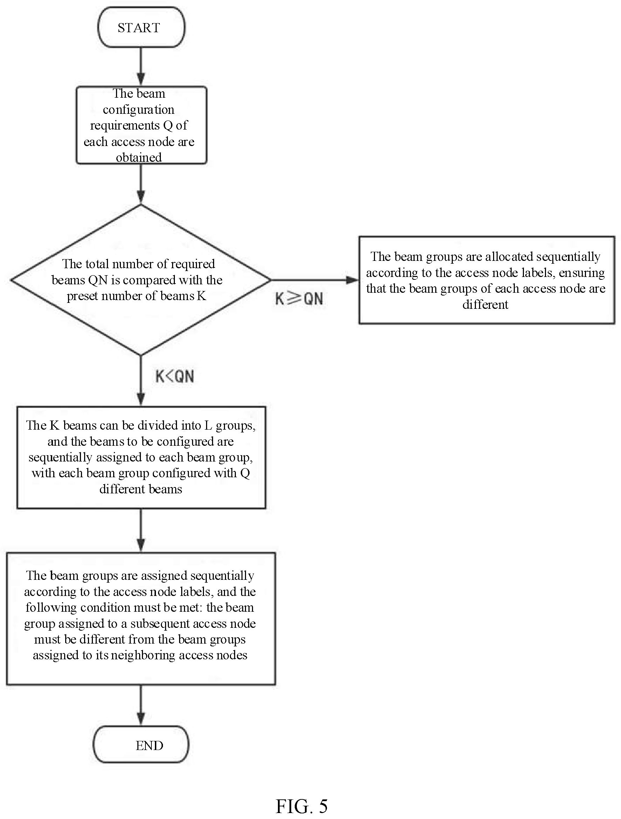

In this embodiment, referring to FIG. 5, FIG. 5 is an overall flow chart illustrating the beam configuration method according to an embodiment of the present application. As shown in FIG. 5, the beam configuration requirements Q of each access node are first obtained, including K access nodes, and the total number of required beams is QN. Then, the total number of required beams QN is compared with the preset number of beams K. If K is greater than or equal to QN, it is determined that the preset beam condition is not met, and the beam groups are allocated sequentially according to the access node labels, ensuring that the beam groups of each access node are different. If K is less than QN, it is determined that the preset beam condition is satisfied. The K beams can be divided into L groups, and the beams to be configured are then sequentially assigned to each beam group, with each beam group configured with Q different beams. For example, the beam groups can include {beam group 1, beam group 2, beam group 3, beam group 4}. These beam groups are then assigned sequentially according to the access node labels, and the following condition must be met: the beam group assigned to a subsequent access node must be different from the beam groups assigned to its neighboring access nodes. For example, if the neighboring access nodes of access node 1 include access nodes 2, 3, and 4, then beam group 1 is assigned to access node 1, beam group 2 to access node 2, beam group 3 to access node 3, and beam group 4 to access node 4.

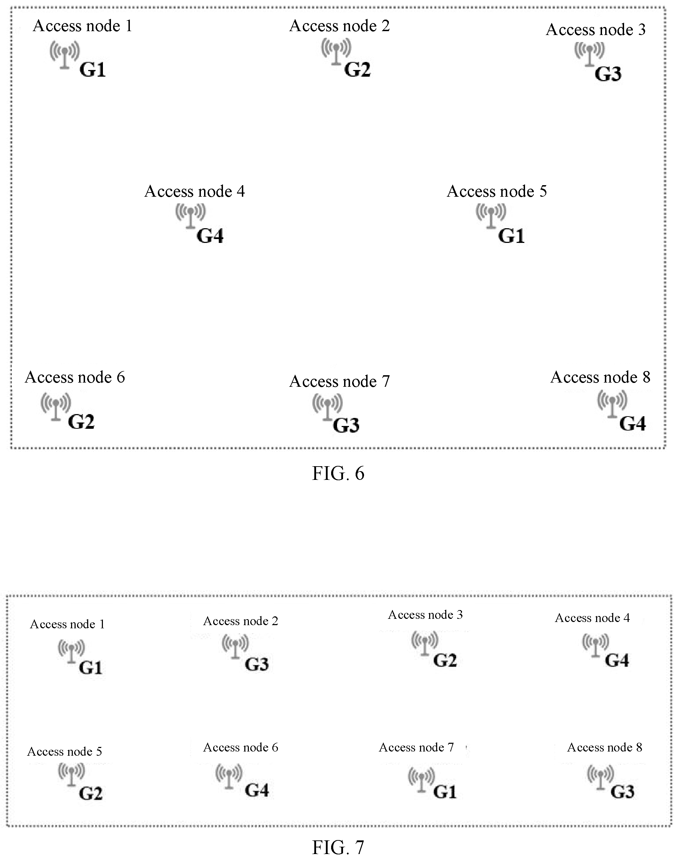

In an embodiment, referring to FIG. 6, FIG. 6 is a schematic diagram of the access nodes in a uniformly distributed scenario of the beam configuration method according to an embodiment of the present application. As shown in FIG. 6, assuming that the access nodes are uniformly distributed within the same cell, and that the cell contains 8 access nodes, i.e., {access node 1, access node 2, ..., access node 8}, the preset number of beams is 32, and the beam configuration requirement corresponding to each access node is 8. Since 8 × 8 is greater than 32, the preset beam condition is met. The 32 SSB beams can be divided into groups, and the SSB beams are sequentially assigned to each group in a way that each SSB beam group is configured with 8 beams, ensuring that the beams within each SSB beam group are different. The target number of beam groups is 32/8 = 4, denoted as {SSB beam group 1, SSB beam group 2, SSB beam group 3, SSB beam group 4}. One simple allocation method is as follows: G1 = SSB beam group 1 = {SSB beam 1, SSB beam 2, ..., SSB beam 8}; G2 = SSB beam group 2 = {SSB beam 9, SSB beam 10, ..., SSB beam 16}; G3 = SSB beam group 3 = {SSB beam 17, SSB beam 18, ..., SSB beam 24}; G4 = SSB beam group 4 = {SSB beam 25, SSB beam 26, ..., SSB beam 32}. The SSB beam groups are assigned sequentially according to the access node labels, and the following condition must be met: the SSB beam groups assigned to the subsequent access nodes must be different from the SSB beam groups of its neighboring access nodes. As shown in FIG. 6, assuming the number of neighboring access nodes is 3, then the neighboring access nodes of access node 1 include access nodes 2, 3, and 4, and the neighboring access nodes of access node 5 include access nodes 6, 7, and 8. Therefore, the final beam configuration result is:

$$\left\{ \begin{array}{l} (\text{access node 1: G1}), (\text{access node 2: G2}), (\text{access node 3: G3}), (\text{access node 4: G4}), \\ (\text{access node 5: G1}), (\text{access node 6: G2}), (\text{access node 7: G3}), (\text{access node 8: G4}) \end{array} \right\}$$

Referring to FIG. 7, FIG. 7 s a schematic diagram of the access nodes in a rectangular distributed scenario of the beam configuration method according to an embodiment of the present application. As shown in FIG. 7, when the access nodes within the same cell are distributed in a long strip shape, assuming that the cell contains 8 access nodes, i.e., {access node 1, access node 2, ..., access node 8}, the preset number of beams is 64, and the beam configuration requirement corresponding to each access node is 16. Since 8 × 16 is greater than 64, the preset beam condition is met. The 64 SSB beams can be divided into groups, and the SSB beams are sequentially assigned to each group in a way that 16 beams are configured for each SSB beam group, ensuring that the beams within each SSB beam group are different. The target number of beam groups is 64/8 = 8, denoted as {SSB beam group 1, SSB beam group 2, SSB beam group 3, SSB beam group 4}. One simple allocation method is as follows: G1 = SSB beam group 1 = {SSB beam 1, SSB beam 2, ..., SSB beam 16}; G2 = SSB beam group 2 = {SSB beam 17, SSB beam 18, ..., SSB beam 32}; G3 = SSB beam group 3 = {SSB beam 33, SSB beam 34, ..., SSB beam 48}; G4 = SSB beam group 4 = {SSB beam 49, SSB beam 50, ..., SSB beam 64}. The SSB beam groups are allocated sequentially according to the access node labels, and the following condition must be met: SSB beam groups assigned to the subsequent access nodes must be different from the SSB beam groups of its neighboring access nodes. As can be seen from FIG. 7, assuming the number of neighboring access nodes is 3, then the neighboring access nodes of access node 1 include access nodes 2, 5, and 6, and the neighboring access nodes of access node 2 include access nodes 1, 3, and 6. Therefore, the final beam configuration result is:

$$\left\{ \begin{array}{l} (\text{access node 1: G1}), (\text{access node 2: G3}), (\text{access node 3: G2}), (\text{access node 4: G4}), \\ (\text{access node 5: G2}), (\text{access node 6: G4}), (\text{access node 7: G1}), (\text{access node 8: G3}) \end{array} \right\}$$

FIGS. 5 and 6 show schematic diagrams of access nodes for illustrative purposes only. The parameters and beam configuration results in this embodiment are also for illustrative purposes only.

In this embodiment, the number of neighboring access nodes corresponding to each access node among the plurality of access nodes is determined, and then the set of neighboring access nodes for each access node is determined based on the inter-node distances and the number of nodes. In this embodiment, the set of neighboring access nodes for each access node is determined based on the inter-node distances and the number of nodes, effectively determining the neighboring access nodes corresponding to each access node and forming the set of neighboring access nodes.

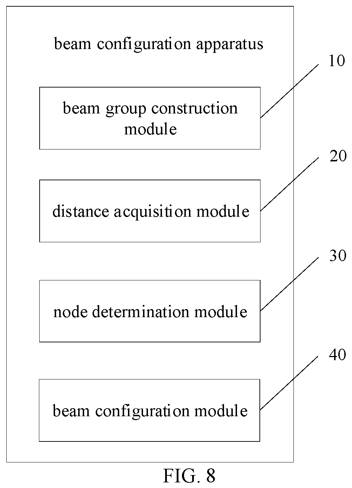

Referring to FIG. 8, FIG. 8 is a structural block diagram of the beam configuration apparatus according to the first embodiment of the present application.

As shown in FIG. 8, the beam configuration apparatus in this embodiment includes: a beam group construction module 10, configured to construct a beam group based on the beams to be configured; a distance acquisition module 20, configured to obtain the inter-node distances between the access nodes; a node determination module 30, configured to determine the set of neighboring access nodes for each access node among the plurality of access nodes based on the inter-node distances; and a beam configuration module 40, configured to configure, the beam group for each access nodes. The beam groups configured for each access node are different from the beam groups configured for the set of neighboring access nodes corresponding to each access node.

In this embodiment, the beam groups are constructed based on the beams to be configured, the inter-node distances between the plurality of access nodes are then obtained, and the set of neighboring access nodes for each access node among the plurality of access nodes is determined based on the inter-node distances. Finally, the beam groups are configured for each access node, and the beam groups configured for each access node are different from the beam groups configured for the set of neighboring access nodes corresponding to each access node. In this embodiment, the set of neighboring access nodes for each access node is determined based on the inter-node distances, and the beam groups are configured for each access node. This allows for beam configuration at each access node, and the beam groups configured for each access node are different from the beam groups configured for the set of neighboring access nodes corresponding to each access node. This at least solves the problem in the related art where the same beams simultaneously transmit signals in overlapping coverage areas, leading to coverage gaps and degraded transmission performance.

It should be noted that the workflow described above is merely illustrative and does not limit the scope of the present application. In practical applications, those skilled in the art can select some or all of the steps as need to achieve the objectives of this embodiment, without being limited thereto.

Furthermore, technical details not described in detail in this embodiment can refer to the beam configuration methods provided in any embodiment of the present application, and will not be repeated here.

Based on the first embodiment of the beam configuration apparatus described above, a second embodiment of the beam configuration apparatus is proposed.

In this embodiment, the beam group construction module 10 is further configured to determine the initial number of beam groups based on a preset number of beams and the beam configuration requirements corresponding to each access node in the same cell; round the initial number of beam groups to obtain the target number of beam groups; and divide the beams to be configured based on the target number of beam groups to obtain the beam groups.

The beam group construction module 10 is further configured to label the beams to be configured to obtain the labeled beams; construct a bank initial beam group based on the target number of beam groups; sequentially assign the beams to be configured to the initial beam group according to the beam labels corresponding to the labeled beams, to obtain the beam groups.

The node determination module 30 is further configured to determine the number of neighboring access nodes corresponding to each access node among the plurality of access nodes; and determine the set of neighboring access nodes for each access node based on the inter-node distances and the number of nodes.

The beam configuration module 40 is further configured to label each beam group to obtain labeled beam groups; sequentially assign the labeled beam groups to the access nodes according to the beam group labels corresponding to the labeled beam groups. The beam groups configured for each access node are different from the beam groups configured for the set of neighboring access nodes corresponding to each access node.

The beam configuration module 40 is further configured to determine the beam configuration requirements corresponding to each access node in the same cell, and to determine the total number of required beams based on the beam configuration requirements; determine that the beam configuration requirements satisfy the preset beam condition if the total number of required beams is greater than a preset number of beams; and construct the beam groups based on the beams to be configured if the preset beam condition is satisfied.

The beam configuration module 40 is further configured to determine that the beam configuration requirement does not satisfy the preset beam condition if the total number of required beams is less than or equal to the preset number of beams; divide the beams to be configured according to the beam configuration requirements corresponding to each access node to obtain divided beam groups if the preset beam condition is not satisfied; and configure the corresponding divided beam groups for each access node.

Other embodiments or specific implementations of the beam configuration apparatus in the present application can refer to the method embodiments described above, and will not be repeated here.

Furthermore, the embodiment of the present application further provides a storage medium on which a beam configuration program is stored. The beam configuration program, when executed by a processor, implements the beam configuration method described above.

It should be noted that, in this document, the terms "comprise" "include" or any other variations thereof are intended to encompass non-exclusive inclusion, such that a process, method, article, or system including a series of elements includes not only those elements but also other elements not explicitly listed, or elements inherent to such process, method, article, or system. In the absence of further limitations, an element defined by the phrase "includes a ..." does not exclude the presence of other identical elements in the process, method, article, or system including the element.

The serial numbers of the embodiments in the present application are for descriptive purposes only and does not indicate the superiority or inferiority of the embodiments.

Through the description of the above embodiments, those skilled in the art can clearly understand that the above-mentioned embodiment methods can be implemented by means of software plus the necessary general hardware platform, and of course can also be implemented by hardware, but in many cases the former is better. Based on this understanding, the technical solution of the present application is essentially, or the part that contributes to some technologies, can be embodied in the form of a software product. This computer software product is stored in a storage medium (such as ROM/RAM, magnetic disk, optical disk) as described above, and includes several instructions to cause a terminal device (which can be a mobile phone, computer, server, or network device, etc.) to execute the methods described in each embodiment of the present application.

The above are some embodiments of the present application and do not limit the scope of the present application. Any equivalent structure or equivalent process transformation made using the contents of the specification and drawings of the present application, or directly or indirectly applied in other related technical fields, are also included in the scope of the present application.

**Claims**

1. A beam configuration method, **characterized by** comprising:

   constructing beam groups based on beams to be configured;
   obtaining inter-node distances between a plurality of access nodes;
   determining a set of neighboring access nodes for each access node among the plurality of access nodes based on the inter-node distances; and
   configuring the beam groups for each access node, wherein beam groups configured for each access node are different from beam groups configured for the set of neighboring access nodes corresponding to each access node.

2. The beam configuration method according to claim 1, wherein the constructing the beam groups based on the beams to be configured comprises:

   determining an initial number of beam groups based on a preset number of beams and beam configuration requirements corresponding to each access node in a same cell;
   rounding the initial number of beam groups to obtain a target number of beam groups; and
   dividing the beams to be configured based on the target number of beam groups to obtain the beam groups.

3. The beam configuration method according to claim 2, wherein the dividing the beams to be configured based on the target number of beam groups to obtain the beam groups comprises:

   labeling the beams to be configured to obtain labeled beams;
   constructing a blank initial beam groups based on the target number of beam groups; and
   sequentially assigning the beams to be configured to the initial beam groups according to beam labels corresponding to the labeled beams to obtain the beam groups.

4. The beam configuration method according to claim 1, wherein the determining the set of neighboring access nodes for each access node among the plurality of access nodes based on the inter-node distances comprises:

   determining a number of neighboring access nodes corresponding to each access node among the plurality of access nodes; and
   determining the set of neighboring access nodes for each access node based on the inter-node distances and the number.

5. The beam configuration method according to claim 1, wherein the configuring the beam groups for each access node comprises:

   labeling each beam group to obtain labeled beam groups; and
   sequentially assigning the labeled beam groups to each access node according to beam group labels corresponding to the labeled beam groups, wherein beam groups configured for each access node are different from beam groups configured for the set of neighboring access nodes corresponding to each access node.

6. The beam configuration method according to any one of claims 1 to 5, wherein before constructing the beam groups based on the beams to be configured, the method further comprises:

   determining beam configuration requirements corresponding to each access node in a same cell, and determining a total number of required beams based on the beam configuration requirements;
in response to that the total number of required beams is greater than a preset number of beams, determining that the beam configuration requirements satisfy a preset beam condition; and
in response to that the preset beam condition is satisfied, constructing the beam group based on the beams to be configured.

7. The beam configuration method according to claim 6, wherein after determining the beam configuration requirements corresponding to each access node in the same cell and determining the total number of required beams based on the beam configuration requirements, the method further comprises:

   in response to that the total number of required beams is less than or equal to a preset number of beams, determining that the beam configuration requirements do not satisfy the preset beam condition;
   in response to that the preset beam condition is not satisfied, dividing the beams to be configured according to the beam configuration requirements corresponding to each access node to obtain divided beam groups; and
   configuring corresponding divided beam groups for each access node.

8. A beam configuration apparatus, **characterized by** comprising:

   a beam group construction module, configured to construct beam groups based on beams to be configured;
   a distance acquisition module, configured to obtain inter-node distances between a plurality of access nodes;
   a node determination module, configured to determine a set of neighboring access nodes for each access node among the plurality of access nodes based on the inter-node distances; and
   a beam configuration module, configured to configure the beam groups for each access node, wherein beam groups configured for each access node are different from beam groups configured for the set of neighboring access nodes corresponding to each access node.

9. A communication device, **characterized by** comprising: a memory, a processor, and a beam configuration program stored on the memory and executable on the processor, wherein the beam configuration program is configured to implement the beam configuration method according to any one of claims 1 to 7.

10. A storage medium, **characterized in that** a beam configuration program is stored on the storage medium, and when the beam configuration program is executed by a processor, the beam configuration method according to any one of claims 1 to 7 is implemented.

1005

1001

processor

1002

| operating system |
| network communication module |
| user interface module |
| beam configuration program |
| memory |

1003

user interface

1004

network interface

FIG. 1

constructing beam groups based on beams to be configured     S10

obtaining the inter-node distances between a plurality of access nodes     S20

determining the set of neighboring access nodes for each access node among the plurality of access nodes based on the inter-node distances     S30

configuring the beam groups for each access node, where the beam group configured for each access node is different from the beam groups configured for the set of neighboring access nodes corresponding to each access node     S40

FIG. 2

determining the initial number of beam groups based on the preset number of beams and the beam configuration requirements corresponding to each access node in the same cell ⟋ S101

↓

rounding the initial number of beam groups to obtain the target number of beam groups ⟋ S102

↓

dividing the beams to be configured based on the target number of beam groups to obtain the beam groups ⟋ S103

↓

obtaining the inter-node distances between a plurality of access nodes ⟋ S20

↓

determining the set of neighboring access nodes for each access node among the plurality of access nodes based on the inter-node distances ⟋ S30

↓

configuring the beam groups for each access node, where the beam group configured for each access node is different from the beam groups configured for the set of neighboring access nodes corresponding to each access node ⟋ S40

FIG. 3

| constructing beam groups based on beams to be configured | S10 |

↓

| obtaining the inter-node distances between a plurality of access nodes | S20 |

↓

| determining the number of neighboring access nodes corresponding to each access node among the plurality of access nodes | S301 |

↓

| determining the set of neighboring access nodes for each access node based on the inter-node distances and the number of nodes | S302 |

↓

| configuring the beam groups for each access node, where the beam group configured for each access node is different from the beam groups configured for the set of neighboring access nodes corresponding to each access node | S40 |

FIG. 4

START

The beam configuration requirements Q of each access node are obtained

The total number of required beams QN is compared with the preset number of beams K

K≥QN

The beam groups are allocated sequentially according to the access node labels, ensuring that the beam groups of each access node are different

K<QN

The K beams can be divided into L groups, and the beams to be configured are sequentially assigned to each beam group, with each beam group configured with Q different beams

The beam groups are assigned sequentially according to the access node labels, and the following condition must be met: the beam group assigned to a subsequent access node must be different from the beam groups assigned to its neighboring access nodes

END

FIG. 5

FIG. 6

FIG. 7

beam configuration apparatus

beam group construction module — 10

distance acquisition module — 20

node determination module — 30

beam configuration module — 40

FIG. 8

## INTERNATIONAL SEARCH REPORT

| International application No. |
| --- |
| **PCT/CN2024/113161** |

| A. | CLASSIFICATION OF SUBJECT MATTER |
| --- | --- |

H04W16/28(2009.01)i; H04W72/04(2023.01)n

According to International Patent Classification (IPC) or to both national classification and IPC

| B. | FIELDS SEARCHED |
| --- | --- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

3GPP, CNTXT, CNKI, ENTXTC, VEN: 波束, 组, 集, 距离, 间距, 接入节点, 基站, 接入点, 邻, 不同, 重合, 重叠, 干扰, 数, beam, group, subset, distance, access node, BS, AP, TRP, eNB, gNB, neighbor, different, overlap, interference, number

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2022051965 A1 (QUALCOMM INC.) 17 March 2022 (2022-03-17) description, paragraphs 86-108 and 150-151 | 1, 4-5, 8-10 |
| Y | CN 101594618 A (ZTE CORP.) 02 December 2009 (2009-12-02) description, pages 4-8 | 1, 4-5, 8-10 |
| A | CN 101115273 A (CHINA INFORMATION TECHNOLOGY DESIGNING & CONSULTING INSTITUTE) 30 January 2008 (2008-01-30) entire document | 1-10 |
| A | CN 109196932 A (HUAWEI TECHNOLOGIES CO., LTD.) 11 January 2019 (2019-01-11) entire document | 1-10 |
| A | US 2014010129 A1 (ALL PURPOSE NETWORKS LLC.) 09 January 2014 (2014-01-09) entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 September 2024** | **15 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/113161**

| Patent document cited in search report | | | Publication date (day/month/year) | Patent family member(s) | | | Publication date (day/month/year) |
|---|---|---|---|---|---|---|---|
| WO | 2022051965 | A1 | 17 March 2022 | None | | | |
| CN | 101594618 | A | 02 December 2009 | None | | | |
| CN | 101115273 | A | 30 January 2008 | None | | | |
| CN | 109196932 | A | 11 January 2019 | US | 2017346525 | A1 | 30 November 2017 |
| | | | | US | 10116349 | B2 | 30 October 2018 |
| | | | | KR | 20190008940 | A | 25 January 2019 |
| | | | | KR | 102226635 | B1 | 10 March 2021 |
| | | | | US | 2019068237 | A1 | 28 February 2019 |
| | | | | US | 10932234 | B2 | 23 February 2021 |
| | | | | WO | 2017202230 | A1 | 30 November 2017 |
| | | | | JP | 2019523580 | A | 22 August 2019 |
| | | | | JP | 6692929 | B2 | 13 May 2020 |
| | | | | EP | 3453213 | A1 | 13 March 2019 |
| | | | | EP | 3453213 | A4 | 01 May 2019 |
| | | | | EP | 3453213 | B1 | 02 September 2020 |
| US | 2014010129 | A1 | 09 January 2014 | US | 9125064 | B2 | 01 September 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202311130896